# EUROPEAN PATENT APPLICATION

(11) **EP 1 300 699 A2**
(43) Date of publication of application: **09.04.2003**
(21) Application number: 02021398.9
(22) Date of filing: 24.09.2002
(51) Int. Cl.: G02B 5/20, G02B 26/12

(54) **Strip neutral density filter for correcting intensity non-uniformity in a raster output scanning system**

(30) Priority: 24.09.2001 US 961779
(71) Applicant: Xerox Corporation, Rochester, New York 14644 (US)
(72) Inventor: Wang, Mark Shi, South Irvine, California 92612 (US)
(74) Representative: Grünecker, Kinkeldey, Stockmair & Schwanhäusser Anwaltssozietät

(57) **Abstract**

A strip neutral density filter varies the Gaussian intensity profile of the modulated light beam in an overfilled raster output scanner to provide a generally uniform intensity light beam spot at the photosensitive medium. The strip neutral density filter is positioned in the light beam path between the emitting laser source and the rotating polygon mirror of the raster output scanner.

## Description

### BACKGROUND OF THE INVENTION

The present invention relates to the intensity of the light beam in a raster output scanner (ROS) and, more particularly, to a strip neutral density filter for correcting the non-uniformity of the intensity of the light beam at the scan line in a raster output scanner having an overfilled facet design.

Many raster output scanners (ROS) use a rotating polygon having flat reflective surfaces, or facets, as the scanning element to form modulated scan lines on the surface of a photosensitive medium. In a typical system, a beam, modulated according to an input video data signal, is emitted from a light source such as a diode laser. The modulated light beam is directed through pre-polygon conditioning optics, onto the facets of the rotating polygon mirror. The polygon mirror rotates in the 3 to 30 krpm range, thus scanning the reflected beam through a post-polygon optical system and imaging the light beam spot as a scan line across the full width of a photosensitive medium moving in a scan, or fast-scan, direction. Meanwhile, the photosensitive medium is advanced relatively more slowly in a slow scan direction which is orthogonal to the fast scan direction. In this way, the light beam scans the medium with a plurality of scan lines in a raster scanning pattern. The light beam is modulated in accordance with the video data signals such that individual picture elements ("pixels") of the image represented by the data are exposed on the photosensitive medium to form a latent image, which can then be developed and transferred to an appropriate image receiving medium such as paper.

In ROS systems there are typically two scanning modes. In a first mode, pre-polygon conditioning optics incorporate an underfilled design; e.g. the light from the laser is collimated to a beam width in the fast scan direction that is smaller than the polygon mirror facet, typically by a factor of approximately 3. The underfilled design has been generally preferred in the past because of a high throughput efficiency and uniform illumination of the imaging facet.

A second mode is the overfilled design where the light beam is collimated to a beam width in the fast scan direction that is larger than the polygon mirror facet by a factor of approximately 3 in the fast scan direction. In an overfilled design, the facet size required to produce a given spot size at the photosensitive medium is greatly reduced allowing more reflective facets to be accommodated on the same diameter polygon mirror. This, in turn, permits the ROS system to form more scan lines per second with a given polygon motor, or, alternatively, to permit the use of less powerful and less expensive polygon motor drives.

The overfilled design has several disadvantages. The throughput efficiency is relatively low (20%), compared to the 50% efficiency of the underfilled design, and the illumination of the imaging facet is not as uniform as the underfilled design.

In an overfilled ROS, the light beam will be incident on and reflected from more than one facet of the rotating polygon mirror. The light beam has a Gaussian intensity profile. As the polygon mirror rotates to scan the light beam spot across a photosensitive medium, the amount of light reflected to the photosensitive medium varies because the facets are sampling different parts of the Gaussian illumination profile and the effective area of the reflective polygon mirror is changing. The purpose of any ROS is to provide a uniform intensity profile light beam spot on the photosensitive medium.

An aspheric lens system can be used to flatten the Gaussian profile of the modulated light beam as taught in US Patent 4,941,721, commonly assigned as the present application and herein incorporated by reference. The aspheric lens system does require expensive, precision fabricated optical components though.

A variable transmission filter is used to correct for polygon mirror error as disclosed in US Patent 5,539,441. The filter raises the intensity at the edges of the Gaussian profile of the modulated light beam to correct for facet to facet jitter at the scan line.

A liquid crystal window at the output of a ROS adjacent to the scan line on the photoreceptor can be used to correct the nonuniformity of a light beam generated by the ROS is disclosed in US Patent 5,745,155, commonly assigned as the present application and herein incorporated by reference. The patent also teaches the use of a long narrow neutral density filter adjacent to the scan line to attenuate the center of the scan line without attenuating the Gaussian intensity profiles of the individual spots that make up the scan line. However, in this patent, the light beam is a moving scanning beam which has been reflected from the rotating polygon mirror.

It is an object of this invention to provide a strip neutral density filter in the pre-polygon optics of an overfilled ROS to correct the non-uniformity of the intensity of the light beam.

### SUMMARY OF THE INVENTION

According to the present invention, a strip neutral density filter varies the Gaussian intensity profile of the modulated light beam in an overfilled raster outputs scanner to provide a generally uniform intensity light beam spot at the photosensitive medium. The strip neutral density filter is positioned in the light beam path between the emitting laser source and the rotating polygon mirror of the raster output scanner.

The strip neutral density filter has a light absorbing edge and a central neutral density filter section between two light transmissive side sections. The strip neutral density filter will block the edges of the incident Gaussian intensity profile light beam, transmit the side slopes of the incident Gaussian intensity profile light beam, and reduce the peak Gaussian intensity profile light beam to a uniform intensity profile.

Other objects and attainments together with a fuller understanding of the invention will become apparent and appreciated by referring to the following description and claims taken in conjunction with the accompanying drawings.

### BRIEF DESCRIPTION OF THE DRAWINGS

Figure 1 is a top view of a raster output scanner having an overfilled facet design with a strip neutral density filter in the pre-polygon optics for correcting the non-uniformity of the intensity of the light beam of the present invention.
Figures 2(a) through 2(e) are a perspective view of the strip neutral density filter of Figure 1 and the Gaussian intensity profile light beam from the light source, the filtered intensity profile light beam after the strip neutral density filter and the generally uniform intensity profile light beam at the photosensitive medium.

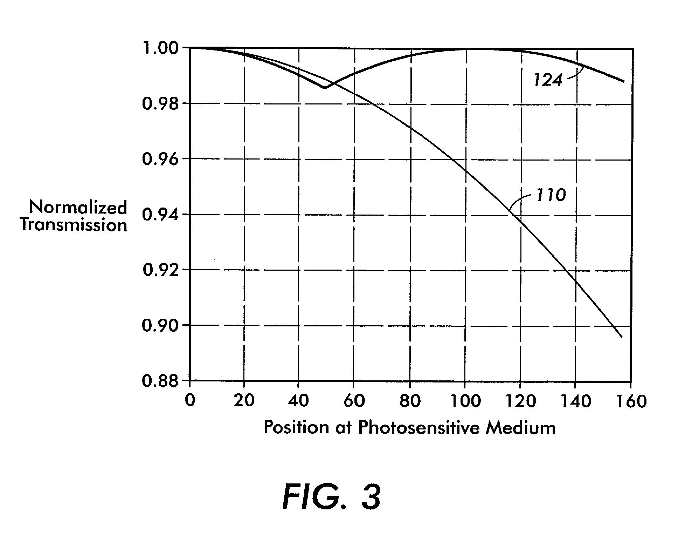

Figure 3 is a graph showing the relative uniformity of light beam intensity with and without the strip neutral density filter of Figure 1 along the photosensitive medium.

### DESCRIPTION OF THE INVENTION

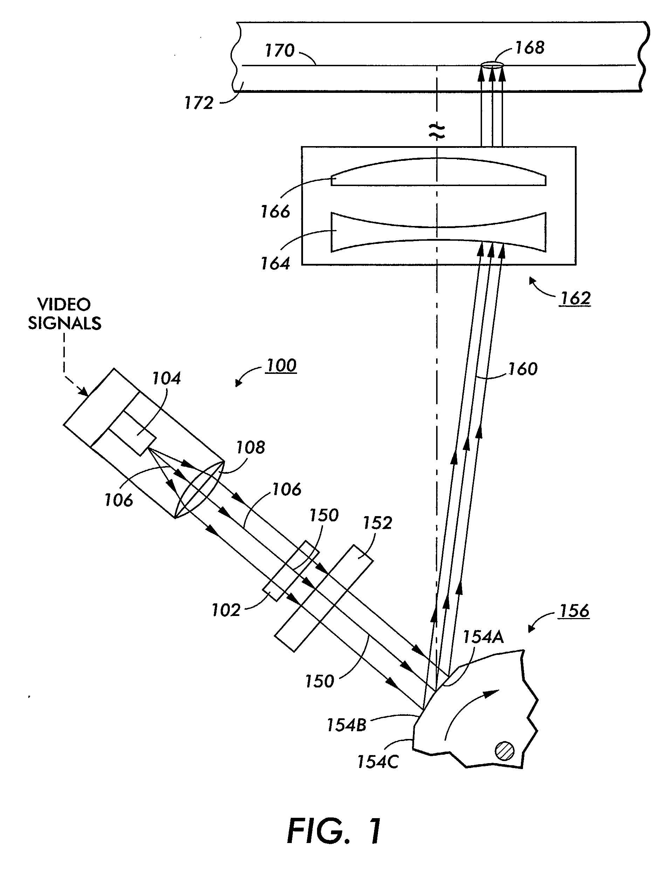

Reference is now made to Figure 1, wherein there is illustrated the raster output scanner 100, having an overfilled polygon facet design with a strip neutral density filter 102 for correcting the non-uniformity of the Gaussian intensity profile of the modulated light beam in accordance with this invention.

In the ROS system 100, video signals serially modulate the laser source 104 to emit an intensity modulated light beam 106. The video signals generically represent pixel data for modulating the light beam 106 on and off to form spots (or pixels) across the scan line of the photosensitive medium.

The light beam 106 is collimated by collimating lens 108. The collimated modulated light beam 106 is filtered by strip neutral density filter 102.

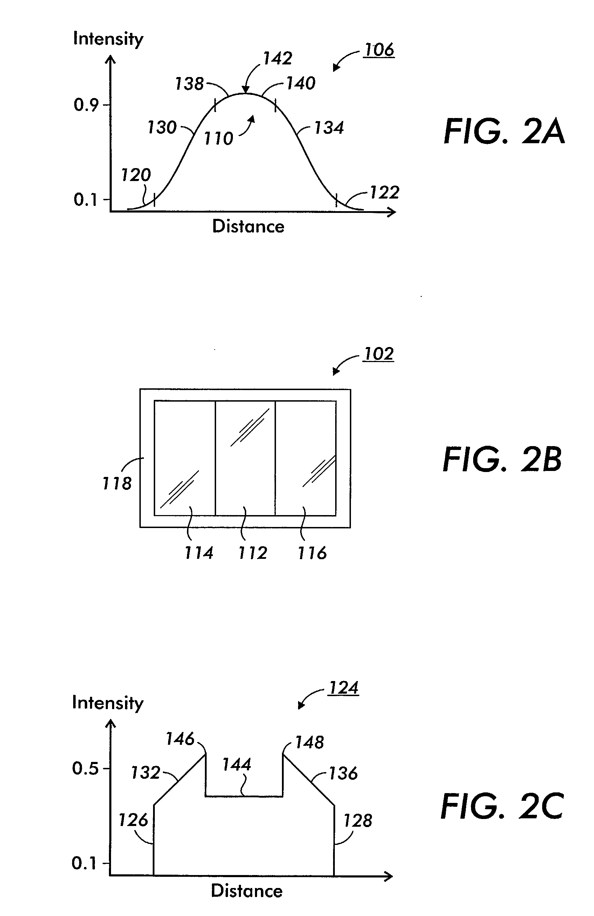

As best seen in Figure 2a, the collimated light beam 106 has a Gaussian intensity profile 110.

The strip neutral density filter 102 as shown in Figure 2b has a central neutral density filter section 112 adjacent on each side to a first light transmissive side section 114 and a second light transmissive side section 116. The first light transmissive side section 114, the central neutral density filter section 112 the second light transmissive side section 116 are surrounded by a light absorbent edge 118 to form the strip neutral density filter 102.

The collimated light beam 106 of Figure 2a is incident upon the strip neutral density filter 102 of Figure 2b. The edges 120, 122 of the Gaussian profile 110 of the light beam 106 are blocked by the optical stop of the light absorbent edge 118 of the strip neutral density filter 102, so that the filtered intensity profile 124 as shown in Figure 2c has truncated edges 126 and 128.

The first side slope 130 of the Gaussian profile 110 of the light beam 106 will be transmitted uneffected by the first light transmissive side section 114 of the strip neutral density filter 102 so that the filtered intensity profile 124 has a first Gaussian side slope 132.

Similarly, the converse of the first side slope 130, the opposite second side slope 134 of the Gaussian profile 110 of the light beam 106 will be transmitted uneffected by the second light transmissive side section 116 of the strip neutral density filter 102 so that the filtered intensity profile 124 has a first Gaussian side slope 136.

The central upper slopes 138 and 140 and the peak 142 of the Gaussian profile 110 of the light beam 106 will be reduced in intensity by the central neutral density filter section 112 of the strip neutral density filter 102 to a central flat uniform intensity plateau profile 144 in the filtered intensity profile 124.

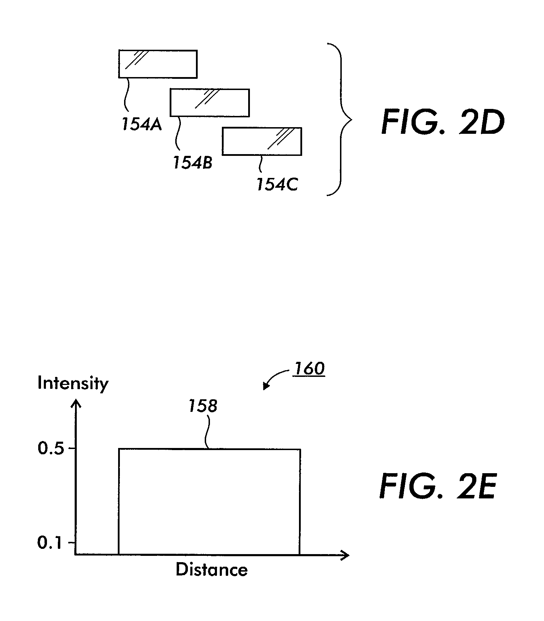

The uppermost point 146 of the first Gaussian side slope 132 of the filtered intensity profile 124 has the same intensity level as the uppermost point 148 of the second Gaussian side slope 134 of the filtered intensity profile 124. Both points 146 and 148 have an intensity level 75% to 25% of the peak intensity 142 of the incident Gaussian profile 110 of the light beam 106. In this illustrative example of Figure 2, the uppermost points 146 and 148 after filtering have an intensity level 60% of the original peak intensity 142.

The central flat uniform intensity profile 142 between the uppermost point 146 of the first Gaussian side slope 132 and the uppermost point 148 of the second Gaussian side slope 134 has an intensity level 90% to 40% of the adjacent uppermost points 146 and 148. In this illustrative example of Figure 2, the central flat uniform intensity profile 142 has an intensity level 65% of the adjacent uppermost points 146 and 148.

The exact intensity levels are dependent upon ROS parameters and requirements for the intensity of the light source and light beam intensity at the photosensitive medium.

The incident light beam 106 emitted by the light source 104 has a Gaussian intensity profile 110. After filtering by the strip neutral density filter 102, the resulting intensity profile 124 of the filtered beam 150 has a truncated edge 126, a first Gaussian side slope 132, a central flat uniform intensity 142, a second Gaussian side slope 134 and a truncated edge 128. The central flat uniform intensity plateau has a lower intensity that the uppermost points 146, 148 of the Gaussian side slopes 132, 134.

Returning to Figure 1, the filtered beam 150 from the strip neutral density filter 102 is focused by the cylindrical lens 152 onto the facets 154A, 154B and 154C of the polygon mirror 156. The ROS 100 of the present application has an overfilled design so that the light beam 150 will illuminate more than one facet.

The cylindrical lens 152 creates a focused beam 150 in the cross-scan plane at the polygon mirror 156, while maintaining the collimation of the beam 150 in the perpendicular or scan plane. The collimated uniform intensity beam 150 has a width in the scan direction, which will overfill a single facet and illuminate facets 154A, 154B and 154C in sequence. Facet 154A is shown for illustrative purposes as the imaging facet that reflects the light beam towards the photosensitive medium, while facets 154B and 154C are adjacent facets which will reflect the light beam 150 as the polygon mirror 156 rotates.

Returning to Figure 2, the filtered intensity profile 124 of Figure 2c will be reflected and convolve from overfilled facets 154A, 154B and 154C of Figure 2d in sequence to form a flat intensity profile 158 of Figure 2e for the light beam 160 upon reflection from the polygon mirror 156 and at the photosensitive medium.

Returning to Figure 1, as the polygon mirror 156 rotates, a uniform intensity light beam 160 is reflected from overfilled facet 154A and scanned through a post-polygon optical system which includes f-theta lens assembly 162. Lens assembly 162 includes either a toroidal f-theta lens pair 164 and 166 or a non-toroidal f-theta lens plus a cylinder mirror (not shown).

The f-theta lens assembly 160 focuses the light beam 158 to a generally circular spot 168 with a generally uniform intensity profile 158 on the scan line 170 of the photosensitive medium 172.

The rotating overfilled facets of the polygon mirror 158 cause the spot 168 to sweep across the photosensitive medium 172 forming a succession of scan lines. The scan line 170 lies in the fast scan direction. In addition, as the facets 154A, 154B and 154C are rotated, photosensitive medium 172 moves in a slow scan direction, substantially perpendicular to the fast scan direction,. Movement in the slow scan direction is such that successive rotating overfilled facets of the polygon 158 form successive scan lines that are offset from each other in the slow scan direction.

In this way, the light beam scans the photoesensitive medium with a plurality of scan lines in a raster scanning pattern such that individual picture elements ("pixels") of the image represented by the video data signals form a latent image on the photosensitive medium, which can then be developed and transferred to an appropriate image receiving medium such as paper.

As seen in the graph of Figure 5, the Gaussian intensity beam profile 110 of light beam 106 has a power uniformity falloff of 10.5 percent across the photosensitive medium while the filtered intensity profile 124 of the filtered light beam 150 from the strip neutral density filter 102 after reflection from the overfilled facets has a power uniformity falloff of 1.4 percent across the photosensitive medium.

The strip neutral density filter 102 creates a more uniform intensity profile light beam for the overfilled ROS 100 of the present invention.

In the overfilled ROS 100, the laser source 104, the collimating lens 108, the strip neutral density filter 102 and the cylindrical lens 152 form the pre-polygon optics. The strip neutral density filter 102 filters the stationary light beam 106 between the light source 104 and the rotating polygon mirror 158.

F-theta lenses 162 are designed to provide a linear relationship between the rotation of polygon mirror 158 and the deflection of the scanned beam 160 in the scan direction onto the scan line 170 of the photosensitive medium 172.

## Claims

1. A raster output scanning system in an overfilled polygon design comprising:
a light source for emitting a light beam having a Gaussian intensity profile;
a photosensitive medium;
a rotating polygon mirror having a plurality of reflective facets, said rotating polygon mirror being located in the path of said light beam from said light source to said photosensitive medium, successive reflective facets scanning said light beam across said photosensitive medium;
a neutral density filter being located in the path of said light beam from said light source to said rotating polygon mirror, said neutral density filter variably reducing said Gaussian intensity profile such that said light beam has a generally uniform beam intensity at said photosensitive medium.

2. The raster output scanning system in an overfilled polygon design of claim 1 wherein said neutral density filter and said successive reflective facets form said generally uniform beam intensity of said light beam at said photosensitive medium.

3. The raster output scanning system in an overfilled polygon design of claim 1 wherein said neutral density filter has a first transmissive section, a second transmissive section, and a central neutral density filter section such that said central neutral density filter section is positioned between said transmissive section and said second transmissive section.
